(19) Europäisches Patentamt
European Patent Office
Office européen des brevets

(11) Publication number: 0 059 100 B1

(12) EUROPEAN PATENT SPECIFICATION

(45) Date of publication of patent specification: 17.10.84

(51) Int. Cl.$^3$: C 04 B 41/26

(21) Application number: 82300910.5

(22) Date of filing: 23.02.82

# (54) Process for protecting materials from pollution.

(30) Priority: 24.02.81 IT 1993381

(43) Date of publication of application: 01.09.82 Bulletin 82/35

(45) Publication of the grant of the patent: 17.10.84 Bulletin 84/42

(84) Designated Contracting States: AT BE DE FR GB NL

(56) References cited:
FR-A-1 593 472
FR-A-1 605 037
NL-B- 134 636
US-A-3 385 812

(73) Proprietor: Montedison S.p.A.
Patents & Licensing Dept. Foro Buonaparte, 31
P.O. Box 10528
I-20121 Milan (IT)

(73) Proprietor: CONSIGLIO NAZIONALE DELLE RICERCHE
Piazzale Aldo Moro, 7
I-00198 Roma (IT)

(72) Inventor: Piacenti, Franco
79, Via Costa S. Giorgio
Firenze (IT)
Inventor: Ciampelli, Federigo
2, Via Sassoferrato
Milan (IT)
Inventor: Pasetti, Adolfo
2, Piazza Sesia
Milan (IT)

(74) Representative: Whalley, Kevin et al
Marks & Clerk 57/60 Lincoln's Inn Fields
London WC2A 3LS (GB)

EP 0 059 100 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for protecting materials from pollution, and more particularly to a process for protecting marble, stones, tiles and articles formed from such materials, which are exposed to the air, from the degrading action caused by atmospheric and polluting agents.

As is known, the degradation of building materials such as marble, stones and tiles, and of decorative and artistic handworks or other articles (friezes, colonnades, statues) formed from such materials, is caused by two different kinds of phenomena: chemical phenomena and physical phenomena, both occurring in the presence of water.

A physical phenomenon affecting all building materials is that due to successive freezing and defrosting or thawing of water absorbed by the porosity of the material concerned, which involves variations in the specific volume and tensions capable of causing fractures or in any case reciprocal detachment of the individual particles composing the material.

Another physical phenomenon consists of the dissolution in water of the limestone present in marble as an essential component, and in stones as binder, with consequent deterioration of cohesion of the material granules.

Even more important for the degradation of materials and articles formed therefrom exposed to the air are chemical phenomena, which essentially consist of attack of carbonates present in the material or article by the polluting agents present in air (carbon dioxide, sulphur dioxide, nitrogen oxide, hydrochloric acid, hydrogen sulphide). Such pollutants react with the material in the presence of water and their concentration is particularly high at the beginning of raining.

It is also known that, with a view to eliminating or at least effectively reducing the above-mentioned drawbacks, it is necessary to markedly decrease the penetration velocity of water from the outside to the inside of the material to be protected. To achieve this purpose, chemical compounds exerting a water-repellent action are usually applied on the outer surface of the material to be protected.

The protective compound, in order to be capable of exerting the desired action and to simultaneously avoid any accompanying degrading phenomena or any undesired side phenomena, must possess the following essential characteristics:

(1) chemical inertia toward the material to be protected;
(2) low volatility;
(3) chemical stability in general and in particular to atmospheric agents, to light and to heat;
(4) transparency and absence of colour;
(5) insolubility in common organic solvents;
(6) permeability to air and to water vapour;
(7) capability of retaining for a long time its own characteristics of solubility, to secure the possibility of removing it from the material and, as a consequence, the reversibility of the treatment.

As is known, film-forming substances such as glues, drying oils, resins and polymerizable substances are often utilized for the protection of materials. Such products, which are chiefly employed in the restoration of monuments and of manufactured articles in order to utilize the "consolidating" properties thereof in the event that the degradation should be at such an advanced stage as to require the consolidation of fractures or of parts of material which have lost the natural cohesion of the material particles, besides being generally unstable to chemical agents and to sunlight, drastically reduce the permeability of the treated surfaces to air and to water vapour. Thus, extremely marked phenomena of deterioration of cohesion occur in the material, usually stone, under the impermeable film due to the action of the entrapped water.

Other products which are presently employed, apart from the film-forming or polymerizing products, are waxy or oily substances such as natural oils or waxes, and organic and metallorganic products, such as silicones. All these products possess a low stability to chemical agents and to sunlight, as a result of which they are subject, in the course of time, to yellowing or decolouration, thus altering the colour of the material. Also such products lose their impermeabilizing properties as their chemical structure alters.

It is thus apparent that both the film-forming substances and the waxy or oily substances employed so far in the protection of materials exposed to the atmosphere are not wholly suitable, since they do not possess all the characteristics required.

It has now been found that by employing a perfluorinated liquid product in the form of a perfluoropolyether having adequate molecular weight, volatility and viscosity, it is possible to obtain a surface treatment which meets the above-mentioned requirements.

The present invention provides a process for protecting marble, stones, tiles and articles formed from such materials from degradation caused by atmospheric and polluting agents, by applying onto the surface of the said material or article a protective agent, characterized in that the protective agent is a fluid perfluoropolyether (such as, for example, "Fomblin" produced by Ausimont S.p.A.—Milan), of the general formula:

$$A-O(\underset{\displaystyle CF_3}{\underset{|}{CF}}-CF_2O)_p-(CF_2-O)_q-(\underset{\displaystyle CF_3}{\underset{|}{CF}}-O)_r-B$$

wherein p, q and r are integers, q and/or r may be equal to zero, and the sum p+q+r is a number from 5 to 250, or of the general formula:

$$A—O(C_2F_4O)_m—(CF_2—O)_n—B$$

wherein m and n are integers, n may be equal to zero, and the sum m+n is a number from 10 to 1000, and wherein A and B are fluoroalkyl radicals containing from 1 to 3 carbon atoms, the perfluoropolyether being applied as such or diluted with a solvent or a mixture of solvents having a boiling point below 80°C, preferably a chlorofluorohydrocarbon or a mixture of chlorofluorohydrocarbons.

The application of such a perfluoropolyether onto the surface of the material or article to be protected may be effected according to any technique usually employed for such purpose, for example by means of a brush, or by a spray gun or by any other spray method.

The perfluoropolyether may be employed as such or, preferably, diluted in a suitable chlorofluorinated solvent which permits better penetration of the fluid into the pores of the material and which has a sufficiently low boiling point as to rapidly evaporate after application. Particularly suitable solvents for such purpose are the chlorofluorohydrocarbons such as trichlorotrifluoroethane (Algofrene 113 produced by Ausimont S.p.A—Milan) for brush or spray applications, and mixtures of trichlorofluoromethane (Algofrene A 11) and dichlorodifluoromethane (Algofrene A 12) for spray applications.

The concentrations of the perfluoropolyether solutions to be employed may range from 100% of perfluoropolyether to 5% of perfluoropolyether, the solvent being preferably selected from those indicated hereinbefore.

The amount of protective agent to be applied per unit surface area of the material to be protected is selected as a function of the porosity of the material; the higher is the porosity, the greater is the amount of protective agent to be applied per unit surface area.

The advantages offered by the use of perfluoropolyethers in accordance with the present invention compared with the use of the conventional protective products utilized until now are as follows:

(1) the perfluoropolyethers are chemically inert substances, permanently stable and resistant to the most acive and aggressive chemical agents, such as chlorine, fluorine, acids and alkalis, and as a consequence resistant to the atmospheric pollutants;
(2) they are substances stable to heat up to 300°C, and remain liquid until −70°C, as a result of which they are stable even to extreme temperatures;
(3) their surface tension is low, which favours their penetration of even the smallest pores of the material to be treated, without clogging the pores;
(4) they are fully water-repellant substances, which is an essential property for the protection of materials and articles exposed to atmospheric and polluting agents;
(5) they are oil-repellant and immiscible with the common organic solvents, and as a consequence they act as a barrier to pollution by residues of oils of the hydrocarbon type present in the atmosphere;
(6) they are soluble only in a few fluorinated or chlorofluorinated solvents, which may be employed as diluents for the purpose of better application onto the surface to be treated or also for removing the protective agent from the treated surface, thus rendering the treatment fully reversible;
(7) they are permeable to the air and water vapour, thus allowing controlled aeration, humidification, and dehumidification of the inner layers of the treated material;
(8) they possess a very low vapour tension, and as a consequence they do not volatilize, but remain stably on the treated material;
(9) they are stable and transparent to U.V. light radiation, and as a consequence they do not alter because of exposure to sunlight and do not modify the original colour of the material.

The invention will be further described with reference to the following illustrative Examples.

Example 1

There were utilized two specimens of "Serena" stone of the same composition, having the shape of a cube with sides of 70 mm.

One of the two specimens was superficially treated with a perfluoropolyether commercially available as "Fomblin Y R" (Trade Mark of Ausimont S.p.A.), having a kinematic viscosity of 1000 cST and an average molecular weight of 6000, while the other specimen was left untreated. The perfluoropolyether was applied diluted to 50% with trichlorotrifluoroethane and by using a compressed air sprayer, so as to cause an amount of protective agent equal to 60 g/m² to deposit onto the specimen surface.

The penetration rate of water was determined on both specimens after seven days. Such measurement was carried out by applying to a face of the specimen a device consisting of a glass cylinder filled with water and connected to a graduated micropipette allowing the measurement of the amount of water absorbed by the surface in contact with the specimen. Such a device is described in more detail in the document published by the group Unesco—Rilem PEM, No. 78/182. The reading of the water absorbed was effected at prefixed intervals of time and the quantity read was expressed in microliters/cm² of surface.

In the treated specimen the number of

microliters of water absorbed per $cm^2$ were 2.5 after 10 minutes, 5.8 after 20 minutes and 8.3 after 30 minutes; in the untreated specimen, the absorbed amounts were 6.8 after 10 minutes, 17.4 after 20 minutes and 27.0 after 30 minutes.

From the comparison between the two specimens it is apparent that the surface treatment with the protective agent strongly reduces the penetration rate of water into the inside of the stone.

Example 2

The test described in Example 1 was repeated by using two specimens having the same sizes as specified, but consisting of Carrara "Marble for statues". The measurement of the water penetration rates, effected according to the same method as described, gave the following results: in the treated specimen, the number of microliters of water absorbed per $cm^2$ were 0.0 after 5 minutes, 0.3 after 10 minutes, 0.9 after 20 minutes and 3.8 after 120 minutes; in the untreated specimen, the absorbed amounts were 4.4 after 5 minutes, 7.0 after 10 minutes, 12.2 after 20 minutes and 51.2 after 120 minutes.

From the comparison between the two specimens it is apparent that the protective surface treatment considerably reduced the penetration rate of water also in a material having a porosity considerably different from that of the "Serena" stone treated in Example 1.

Example 3

The specimen of tests 1 and 2 were kept outdoors for two years. The tests to determine the water penetration rate were repeated, according to the method described in Example 1, every six months: no meaningful differences from the initial results specified hereinbefore were ascertained.

These tests establish that the effectiveness of the treatment lasts for not less than two years.

Example 4

A flat surface of "Serena" stone was treated with perfluoropolyether "Fomblin Y R" having the characteristics described in Example 1, diluted with trichlorotrifluoroethane (70 parts of perfluoropolyether and 30 parts of solvent), by brush-treatment until an amount of protective agent equal to 80 $g/m^2$ had deposited on the stone surface.

After two days, by using a microsyringe, a drop of distilled water having a volume of 5 microliters was deposited onto the treated surface. 10 and 20 seconds respectively after deposition of the drop, the contact angle was measured by utilizing a photographic enlargement.

Such angle was 63° and 56° respectively. Analogous measurements on another specimen of the same stone not treated with the protective agent yielded values of respectively 9° after 10 seconds and not determinable (due to absorption) after 20 seconds.

This test established the water-repellent property imparted by the treatment to the stone surface.

Example 5

The test described in Example 4 was repeated by employing a perfluoropolyether having the general formula

$$CF_3O(C_2F_4O)_m—(CF_2O)_n—CF_3,$$

wherein m/n=0.8 and having a kinematic viscosity of 250 cSt and an average molecular weight of 15,000. The perfluoropolyether was diluted, before being applied to the surface of "Serena" stone, with trichlorotrifluoroethane in the ratios specified hereinbefore.

Contact angles of 26° and 24° were measured 10 seconds and 20 seconds respectively after deposition of the drop.

Example 6

The test described in Example 4 was repeated by utilizing, as material to be protected, a flat surface of Carrara "Marble for statues". Contact angles of 102° and 95° were measured 10 seconds and 20 seconds respectively after deposition of the drop. Analogous measurements effected on another specimen of the same material not treated with protective agent yielded values of 30° and 20° after 10 seconds and 20 seconds respectively from the deposition of the drop.

Example 7

Specimens of "Serena" stone and of Carrara "Marble for statues" were treated with a perfluoropolyether commercially avialable under the Trade Mark "Fomblin Y R", having the characteristics described in Example 1, by using a spray technique. For such purpose there was prepared a cylinder filled with 5% of perfluoropolyether and with 95% of a mixture (in equal parts) of trichlorofluoromethane and dichlorodifluoromethane. The application was repeated until an amount of protective agent equal to 60 $g/m^2$ had deposited on the specimen surface.

The specimens were then subjected to U.V. radiation by a 15 watt medium pressure mercury-vapour "Phillips" lamp. The specimens were placed at a distance of 30 cm from the lamp and radiation was continued for 2 hours at a temperature of 40°C. After such test no change in the natural colour of the treated surface was observed, nor were traces of alteration products (for example fluorite) detected by means of X-ray diffractometric analyses.

Comparative example 1

Example 7 was repeated by treating the surface of the specimens with a non-fluorinated protective agent generally utilized for the

protection of stone, more specifically with a product consisting of a hydrocarbon emulsion of a quaternary ammonium base. In this case also the amount of protective agent deposited on the surface of the specimens was equal to 60 g/m². After radiation was applied in the manner described hereinbefore, an evident yellowing of the treated surfaces was observed.

Comparative example 2

A "Serena" stone specimen of cubic shape, having sides of 70 mm, was treated with the same commercial hydrocarbon solution described in the Comparative Example 1. The measurement of the permeability to water after seven days, carried out as described in Example 1, gave a result of 8.5 microliters after 30 minutes. After exposure to atmospheric agents for two years, the same measurement carried out on the same specimen gave a result of 28 microliters after 30 minutes, which indicates that the protective effect of the treatment had totally ceased.

**Claims**

1. A process for protecting marble, stones, tiles and articles formed from such materials from degradation caused to atmospheric and polluting agents, by applying onto the surface of the said material or article a protective agent, characterized in that the protective agent is a perfluoropolyether of the general formula:

$$A-O(\underset{CF_3}{\underset{|}{CF}}-CF_2O)_p-(CF_2-O)_q-(\underset{CF_3}{\underset{|}{CF}}-O)_r-B$$

wherein p, q and r are integers, q and/or r may be equal to zero, and the sum p+q+r is a number of 5 to 250, or of the general formula:

$$A-O-(C_2F_4-O)_m-(CF_2-O)_n-B$$

wherein m and n are integers, n may be equal to zero, and the sum m+n is a number from 10 to 1000, and wherein A and B are perfluoroalkyl radicals containing from 1 to 3 carbon atoms.

2. A process as claimed in Claim 1, characterized in that the perfluoropolyether is applied diluted with a solvent or a mixture of solvents having a boiling temperature below 80°C.

3. A process as claimed in Claim 2, characterized in that the said solvent is a chlorofluorohydrocarbon or a mixture of chlorofluorohydrocarbons.

**Patentansprüche**

1. Verfahren zum Schutz von Marmor, Steinen, Fliesen und aus solchen Materialien hergestellten Artikeln vor einer durch atmosphärische und verschmutzende Mittel verursachten Zersetzung, durch Auftragen eines Schutzmittels auf die Oberfläche dieses Materials oder Artikels, dadurch gekennziechnet, daß das Schutzmittel ein Perfluorpolyether der allgemeinen Formel

$$A-O(\underset{CF_3}{\underset{|}{CF}}-CF_2O)_p-(CF_2-O)_q-(\underset{CF_3}{\underset{|}{CF}}-O)_r-B$$

in welcher p, q und r ganze Zahlen sind, q und/oder r gleich Null sein können und die Summe p+q+r eine Zahl von 5 bis 250 ist, oder der allgemeinen Formel

$$A-O-(C_2F_4-O)_m-(CF_2-O)_n-B$$

in welcher m und n ganze Zahlen sind, n gleich Null sein kann und die Summe m+n eine Zahl von 10 bis 1000 ist, und in welchen A und B Perfluoralkylreste mit 1 bis 3 Kohlenstoffatomen sind, ist.

2. Verfahren nach Anspruch 1, dadurch gekennzeichnet, daß der Perfluorpolyether verdünnt mit einem Lösungsmittel oder einer Lösungsmittelmischung mit einem Siedepunkt unter 80°C aufgetragen wird.

3. Verfahren nach Anspruch 2, dadurch gekennzeichnet, daß das Lösungsmittel ein Chlorfluorkohlenwasserstoff oder eine Mischung von Chlorfluorkohlenwasserstoffen ist.

**Revendications**

1. Procédé de protection du marbre, de pierre, de tuiles et d'articles formés à partir de ces matériaux contre la dégradation causée par des agents atmosphériques et des agents de pollution par application à la surface de ces matériaux ou articles d'un agent protecteur, caractérisé en ce que l'agent protecteur est un perfluoropolyéther de formule générale:

$$A-O(\underset{CF_3}{\underset{|}{CF}}-CF_2O)_p-(CF_2O)_q-(\underset{CF_3}{\underset{|}{CF}}-O)_r-B$$

dans laquelle;

p, q et r sont des nombres entiers, q et/ou r peuvent égaux à zéro, et la somme p+q+r représente un nombre de 5 à 250, ou de la formule générale:

$$A-O(C_2F_4O)_m-(CF_2-O)_n-B$$

dans laquelle;

m et n sont des entiers, n peut être égal à zéro et la somme m+n représente un nombre de 10 à 1000, et dans laquelle: A et B représentent des radicaux perfluoroalkyles contenant de 1 à 3 atoms de carbone.

2. Procédé selon la revendication 1, caractérisé en ce que le perfluoroéther est appliqué et dilué avec un solvant ou un mélange de solant ayant une température d'ébullition inférieure à 80°C.

3. Procédé selon la revendication 2, caractérisé en ce que ce solvant est un chlorofluorohydrocarbure ou un mélange de chlorofluorohydrocarbures.